# EUROPEAN PATENT SPECIFICATION

(11) **EP 4 521 069 B1**
(45) Date of publication and mention of the grant of the patent: **26.08.2026**
(21) Application number: 23196491.7
(22) Date of filing: 11.09.2023
(51) Int. Cl.: G01C 21/34, B60L 58/12, B60W 50/00, G01C 21/00

(54) **ROUTE PLANNING FOR INCREASED BRAKING PERFORMANCE IN A FUEL CELL POWERED VEHICLE**
ROUTENPLANUNG FÜR ERHÖHTE BREMSLEISTUNG IN EINEM BRENNSTOFFZELLENBETRIEBENEN FAHRZEUG
PLANIFICATION D'ITINÉRAIRE POUR UNE PERFORMANCE DE FREINAGE ACCRUE DANS UN VÉHICULE ALIMENTÉ PAR PILE À COMBUSTIBLE

(43) Date of publication of application: 12.03.2025
(73) Proprietor: VOLVO TRUCK CORPORATION, 405 08 Göteborg (SE)
(72) Inventor: WILHELMSSON, Martin, 423 39 Torslanda (SE); NORDHOLM, Linus, 436 40 Askim (SE); SMIDEBRANT, Tobias, 415 51 Göteborg (SE); TRÖNNBERG, Gabriel, 461 57 Trollhättan (SE); BJERNETUN, Johan, 435 38 Mölnlycke (SE); BLOMQVIST, Jenny, 422 49 Hisings Backa (SE); LINDBERG, Johan, 415 24 Göteborg (SE); AXELSSON, Johan, 438 34 Landvetter (SE)
(74) Representative: Zacco Sweden AB

(56) References cited:
- WO-A1-2005/007444
- WO-A1-2020/232315
- WO-A1-2024/114904

## Description

### TECHNICAL FIELD

This disclosure relates generally to route planning for electrically powered road vehicles. In particular aspects, the disclosure relates to route planning for increased endurance braking performance in fuel cell powered vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrically powered vehicles are becoming more and more common. The electric machines on an electrically powered vehicle can be used for both propulsion and for braking, which is an advantage since at least some of the electrical energy spent on accelerating the vehicle may be recuperated during braking, resulting in an increased overall energy efficiency.

Automotive fuel cell systems have been known for some time. A fuel cell produces electrical energy from hydrogen in an environmentally friendly manner, which is an advantage. A battery powered vehicle may employ an on-board fuel cell system in order to convert hydrogen to electrical power, thereby extending the range of the electrically powered vehicle significantly.

Despite the progress made in the development of battery electric and fuel cell powered electric vehicles to-date, there is a need for improved methods for operating such vehicles. By way of example, WO 2020/232315 A1 discloses an autonomous vehicle which can automatically determine a route that is optimized based on the route energy costs and an optimized path within the route based on energy efficiency associated with the path. WO 2005/007444 A1 relates to techniques for managing energy in a moving body including a supply part that supplies energy and a consumption part that consumes the energy supplied from the supply part. Moreover, WO 2024/114904 A1 is prior art under Art. 54 (3) EPC only and discloses to select an updated route of a fuel cell electric vehicle providing the most efficient regenerative braking performance from among alternative routes and a planned route.

### SUMMARY

According to a first aspect of the disclosure, there is provided a computer system for a heavy-duty vehicle, where the vehicle comprises a fuel-cell system, an electrical energy storage system (ESS) such as a battery system or super capacitor arrangement, and processing circuitry. The processing circuitry is configured to identify a potentially problematic downhill portion of a trip to be undertaken by the heavy-duty vehicle and to determine at least two candidate routes leading from a starting location along the trip to an onset of the potentially problematic downhill portion. The processing circuitry is also configured to predict a state of energy (SoE) of the ESS at the onset of the downhill portion for each candidate route, and to select a proposed route out of the candidate routes at least in part based on the predicted SoE for each candidate route and on an estimated amount of energy regenerated by traversing the downhill portion of the trip. This first aspect of the disclosure may seek to improve braking performance of a fuel cell powered vehicle, and in particular an endurance braking performance, thereby allowing the vehicle to traverse long downhill sections of road both safely and more efficiently. The system generates automated proposals of route selection, which aids an operator of the vehicle, such as a driver or an automated driving algorithm, in safely and efficiently operating the vehicle.

According to some aspects, the heavy-duty vehicle comprises a fuel-cell system arranged to preemptively charge the ESS prior to an uphill portion of a trip to be traversed by the heavy-duty vehicle. It is an advantage that the computer system can be configured to account for such preemptive charging operations since they may cause saturation of the ESS if not properly accounted for.

According to some other aspects, the processing circuitry is configured to predict the SoE of the ESS at least in part by accounting for a predicted fuel cell charging operation along each candidate route. This prediction can be obtained in a number of different ways, as will be described in the following. By accounting for expected fuel cell charging operations along each candidate route, a better prediction of SoE at the onset of the downhill portion is obtained. This feature improves the prediction of the SoE of the ESS at the onset of the downhill portion for each candidate route since the different expected operations of the fuel cell system along each candidate route is more accurately accounted for.

The processing circuitry may also be configured to predict the SoE of the ESS at the onset of the downhill portion for each candidate route at least in part by identifying uphill portions along the candidate routes. Such uphill portions are easily identifiable, e.g., from digital map data or recordings made by vehicles having travelled the candidate routes previously, and normally has a significant impact on the SoE of the ESS. The prediction of SoE at the onset of the downhill portion is therefore improved.

According to the invention, the processing circuitry is configured to implement a digital twin of the energy system of the heavy-duty vehicle, i.e., a digital model of the operating principles of the different vehicle energy system components, and to predict the SoE of the ESS at the onset of the downhill portion for each candidate route at least in part based on the digital twin. A digital twin, which is a model of the vehicle and its energy consumption and generation operations, can be used to obtain accurate information of how the SoE is likely to evolve when the vehicle follows a given route having a given topographical profile. Use of a digital twin in this manner improves the prediction of SoE at the onset of the downhill portion.

The processing circuitry can also be configured to receive prerecorded SoE profile data from an on-board data storage and/or from a remote server for at least a part of the trip to be undertaken by the vehicle, in which case the processing circuitry can be configured to predict the SoE of the ESS at the onset of the downhill portion for each candidate route based at least in part on the prerecorded SoE profile data. This way a more reliable prediction can be obtained, which is an advantage.

According to some aspects, the processing circuitry is configured to select the proposed route out of the two or more candidate routes at least in part based on an energy storage capacity of the ESS. Some vehicles may be able to store more energy compared to other vehicles and may therefore be able to perform endurance braking for longer periods of time. By accounting for energy storage capacity of the ESS in this manner, better routes can be selected, e.g., routes that are shorter and/or faster but comprise more hilly portions. The processing circuitry may also be configured to determine a current energy storage capacity of the ESS based at least in part on an ambient temperature of the vehicle, which often has an effect on both energy storage capacity of the ESS and ability to dissipate energy by cooling heated components such as friction brakes, brake resistors, and the like.

The heavy-duty vehicle optionally comprises an energy dissipation device, such as a brake resistor arrangement. In this case the processing circuitry can be configured to select the proposed route out of the candidate routes at least in part based on an energy dissipating capacity of the energy dissipation device. The processing circuitry can for instance be configured to determine a current energy dissipating capacity of the energy dissipation device based at least in part on a current temperature of the energy dissipation device.

The processing circuitry may also, according to some aspects, be configured to select the proposed route out of the candidate routes at least in part based on endurance braking capacity and/or a cooling capacity of a service brake system of the heavy-duty vehicle. The service brake system, although not capable of extended periods of endurance braking, may still be used to provide some braking effect. A better selection of candidate route can be obtained by accounting for the capabilities of the service brake system.

The processing circuitry is preferably also configured to propose an ESS discharge stop along the route prior to the downhill portion in case none of the candidate routes satisfies an SoE acceptance criteria at the onset of the downhill portion. This improves overall vehicle operation safety.

According to some aspects, the processing circuitry is configured to record an SoE profile along the trip as function of location of the heavy-duty vehicle. This information can then be used to improve future estimations and predictions, both for the same vehicle as well as for other vehicles travelling along the same route. The processing circuitry can also be configured to transmit the recorded SoE profile along the trip to on-board data storage and/or to a remote server.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Figure 1 is an exemplary heavy-duty vehicle according to an example.
Figure 2 illustrates candidate routes leading up to a downhill section of road.
Figure 3 illustrates selection of a first candidate route.
Figure 4 illustrates selection of a second candidate route.
Figure 5 is a claim chart illustrating a method.
Figure 6 schematically illustrates an example computer system.

### DETAILED DESCRIPTION

The detailed description set forth below provides information and examples of the disclosed technology with sufficient detail to enable those skilled in the art to practice the disclosure.

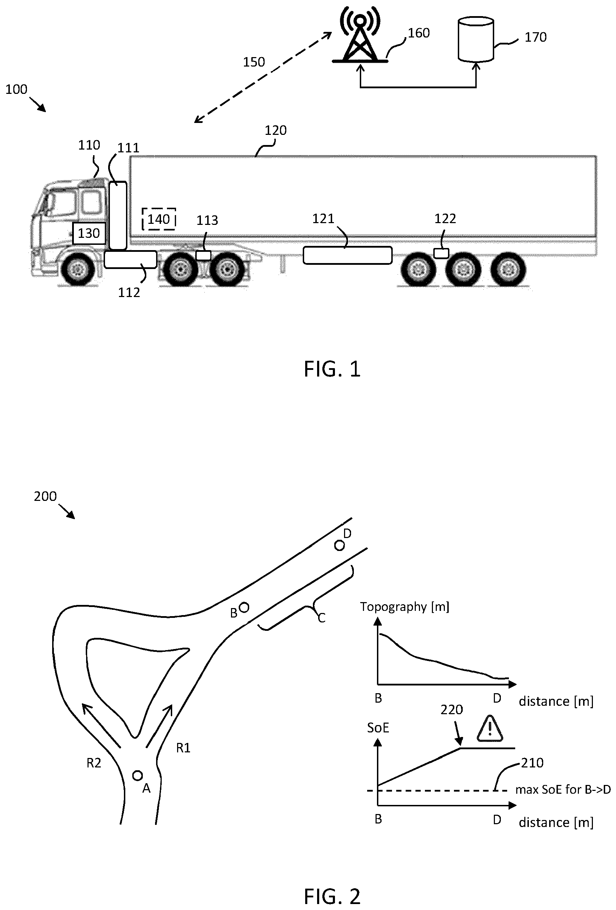

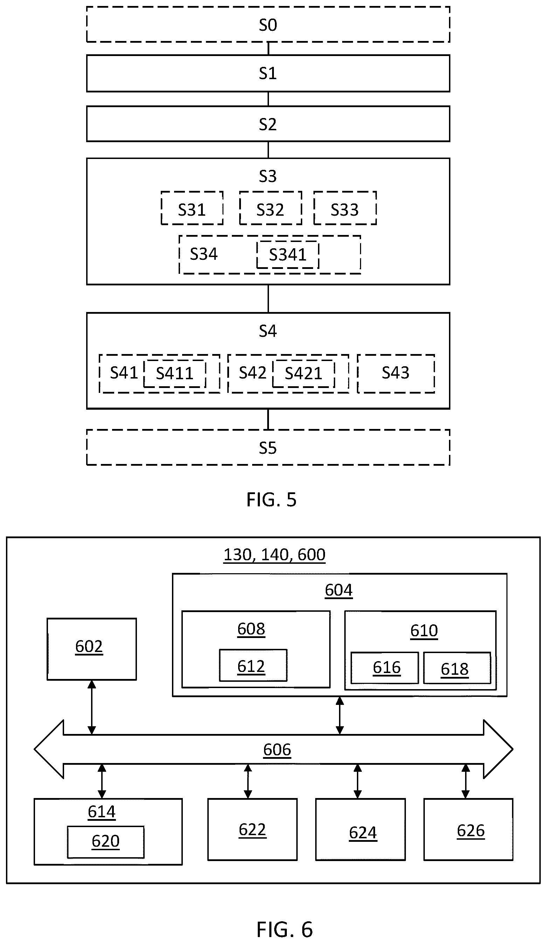

Figure 1 illustrates an example heavy-duty vehicle 100, here in the form of a truck comprising a tractor 110 and a trailer 120. The techniques disclosed herein are, however, generally applicable also in other types of vehicles, such as rigid trucks and also in some passenger cars. The vehicle 100 comprises a computer system 130, 140 which can be arranged in the truck and/or in the trailer. The computer system, or parts thereof, can also be arranged remote from the vehicle 100, on a server 170 or the like, which can be accessed from the vehicle 100 over wireless link 150 to a radio base station 160 or other type of access point. The computer system 130, 140 may comprise a central processing unit, often referred to as an electronic control unit (ECU), or it can be distributed over several separated processing devices. An example computer system will be discussed in more detail below in connection to Figure 6.

A heavy-duty vehicle may be defined in some cases as a freight vehicle of more than 3.5 metric tons or as a passenger transport vehicles of more than 8 seats. A heavy-duty vehicle may also be defined as a vehicle with a frontal area that is larger than 45 square feet, which is about 4.18 square meters. The teachings herein are particularly suitable for use with semi-trailer type vehicles such as that shown in Figure 1 and rigid trucks, including rigid trucks with dollies and one or more trailers.

The vehicle 100 comprises a fuel cell system 111 arranged to generate electrical power from hydrogen in a known manner. This electrical power can be used to power various actuators of the vehicle directly, such as electrical machines, power steering systems, electromechanical service brake systems, and so on. Parts or all of the electrical power generated by the fuel cell system 111 can also be stored in an on-board energy storage system (ESS) 112 on the tractor 110 and/or in an ESS 121 arranged on the trailer 120. The most common type of ESS on road vehicles today are electrical battery systems. However, other forms of ESS can of course also be used, such as super-capacitor based electrical energy storage systems. The below text will mainly refer to battery systems, although it is appreciated that other forms of ESS may just as well be used.

The electric machines on a battery powered vehicle can normally be used for both propulsion and for braking and may be arranged both on the tractor and on the trailer. Energy is consumed during propulsion, and at least partly regenerated during braking when travelling downhill. When going downhill with an electrically powered vehicle it is important that the State of Energy (SoE) of the batteries, often measured in Joules, is not too high at the onset of the downhill portion of road. If it is, the batteries may become fully charged before the end of the downhill portion of road, which means that they are no longer able to absorb energy from the electric machines. If no other way to dissipate energy from the electric machines is available, then the electric machines can no longer be used for braking. The operation of braking for extended periods of time and/or downhill distance is often referred to as endurance braking.

The service brakes, i.e., the friction brakes arranged on the tractor and on the trailer can be used to brake the vehicle in case the SoE of the vehicle ESS is too high to allow braking by the electric machines. However, service brake systems comprising friction brakes such as disc brakes or drum brakes risk malfunction if used for extended periods of time, a condition sometimes referred to as brake fading.

Some vehicles comprise energy dissipating devices 112, 122, such as brake resistors, that can be used to dissipate surplus energy. However, the energy dissipating capacity of such energy dissipating devices is limited. A brake resistor for instance is limited in its energy dissipating capability by its temperature, which increases during energy dissipation. Some brake resistors comprise active cooling systems. The cooling capacity of such cooling systems then also has an impact on the energy dissipating capacity of the brake resistor.

Figure 2 illustrates a scenario 200 where a fuel cell powered heavy-duty vehicle is about to undertake a trip which passes a downhill portion C of road, from a location B at an onset of the downhill portion C to a location D at the end of the downhill portion C. The trip starts or passes by location A, where the vehicle 100 has a choice between a first candidate route R1 and a second candidate route R2 which both lead from the starting location A to the onset B of the downhill portion C. The computer system 130, 140 on the vehicle 100, having regard to the energy storage capacity of the battery system 112, 121 on the vehicle, may determine a maximum allowable SoE 210 at the onset B of the downhill portion C of the trip that allows the vehicle 100 to safely traverse the downhill portion. If the SoE is higher than the maximum allowable SoE 210 at the onset of the downhill portion C, as illustrated in the graph in Figure 2, then the battery system may not be able to absorb the energy regenerated during braking, leading to saturation 220 of the ESS before the end of the downhill portion C is reached. This in turn means that the service brakes will need to be used towards the end of the downhill portion, which could potentially lead to a service brake failure (e.g., due to brake fading) and an increased risk of an accident, since the service brakes are normally not dimensioned for extended periods of endurance braking.

The maximum allowable SoE can be determined in several different ways, with varying complexity. A pre-determined mapping between height meters and total distance of the downhill portion and the maximum allowable SoE can for instance be used to determine how much energy that needs to be dissipated. More advanced options comprise functions that are parameterized by one or more vehicle dependent properties, such as vehicle weight, vehicle type, the expected time duration for traversing the downhill portion of road, the ambient temperature of the vehicle, the allowable speed for traversing the downhill portion of road, and so on. The mapping between downhill portion characteristics and maximum allowable SoE can be determined analytically, using models, and/or by practical experimentation in a straightforward manner. Several methods for computing a maximum allowable SoE for safely traversing a downhill portion of road are also known in the prior art, and the topic will therefore not be discussed in more detail herein.

The present disclosure relates to methods and corresponding vehicle computer systems that improve braking performance along trips comprising extended downhill portions where endurance braking is desired or even necessary. According to the techniques disclosed herein, a potentially problematic downhill portion C of a trip to be undertaken by the heavy-duty vehicle 100 is first identified based on one or more identification criteria, such as downhill portion total length, total height meters to be traversed, average gradient of the downhill portion, and estimated potential energy to be dissipated when traversing the downhill portion C. It is appreciated that the identification of potentially problematic downhill portions can be vehicle specific, since some vehicles may be able to sustain braking for extended periods of time better than other vehicles.

At least two candidate routes R1, R2 leading from the starting location to the onset B of the downhill portion C of the trip are then identified, e.g., using known map-based routing techniques. The candidate route having the least number of hills is then selected and presented to the driver, where a hill is defined as a portion of uphill driving followed by a portion of downhill driving. The definition of a hill may also comprise a requirement of total height from bottom of the hill to the top of the hill, total height meters, and so on. Some additional constraints may be applied to the selection of candidate route, such as a maximum time difference between the fastest route and the selected route, a maximum length difference between the shortest route and the selected route, and a maximum energy consumption difference between the most energy efficient route and the selected route. Adding such selection constraints reduce the number of candidate routes to be selected among, which is an advantage. The proposed routing techniques will now be discussed in more detail, exemplified, and generalized.

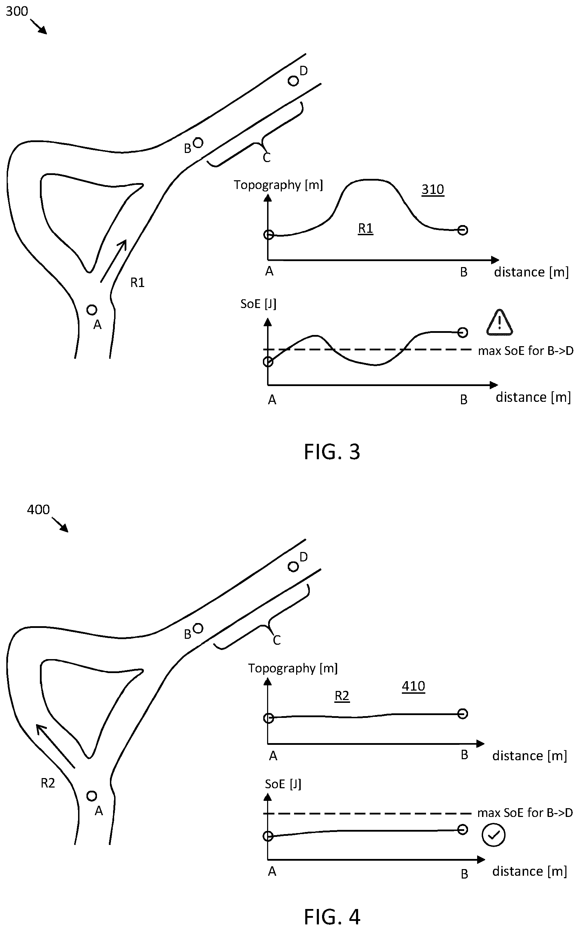

Figure 3 shows a scenario 300 where the vehicle 100 selects candidate route R1 in going from location A to the onset B of the downhill portion C. Candidate route R1 comprises a hill as illustrated by the topology graph 310 in Figure 3, that the vehicle 100 traverses before reaching the downhill portion C. In this case the fuel cell system 111 preemptively charges the battery system 112, 121 in order to be able to reach the top of the hill. The battery SoE therefore increases before the hill starts, then decreases as the vehicle drives up the hill, before increasing again during the downhill drive up to the onset of the downhill portion C. The result of travelling along candidate route R1 from the starting location A to the onset of the downhill portion C is that the SoE of the battery system is quite high, in part due to the margins used by the fuel cell system to reach the top of the hill along candidate route R1, and in part due to the energy that was regenerated during braking along the candidate route R1. With this SoE at the onset of the downhill portion C, the vehicle cannot safely traverse the downhill portion. It is an objective of the techniques disclosed herein to avoid this situation.

Figure 4 shows a scenario 400 where the vehicle 100 instead selects candidate route R2 in going from the starting location A to the onset B of the downhill portion C. This candidate route R2 instead goes around the hill, i.e., is more flat compared to the candidate route R1, as illustrated by the road topography graph 410 in Figure 4. In this case the fuel cell system does not need to preemptively charge the batteries, there is no downhill portion of road just before the long downhill part C, and the battery system SoE is therefore such as to allow endurance braking during the downhill portion C of the trip.

The present invention solves or at least alleviates some problems related to endurance braking by fuel-cell powered vehicles during extended periods of downhill driving. This is achieved by evaluating a plurality of candidate routes leading up to an onset of a downhill portion of a trip to be travelled by the vehicle. The computer system of the vehicle will automatically evaluate each of the candidate routes and propose that or those routes which enable the vehicle to safely brake during the downhill portion of the trip. By following the advice from the predictive computer system, the vehicle operator can avoid a situation where the SoE of the batteries is too high to allow for sufficient endurance braking performance during extended downhill driving.

Put more simply, according to an example, the system evaluates two or more candidate routes leading up to a downhill portion of a trip to be travelled by the vehicle and selects a route among a set of identified candidate routes which does not comprise hills to be travelled over to reach the downhill portion, since driving over such hills just before a downhill portion along a trip may result in a too high SoE at the onset of the downhill portion.

To summarize, with reference also to the flow chart in Figure 5 and the example computer system 600 illustrated in Figure 6, there is disclosed herein a computer system 130, 140 for a heavy-duty vehicle 100 comprising a fuel-cell system 111 arranged to provide electrical power to charge an ESS 112, 121 of the vehicle 100. The ESS may be arranged on the tractor 110 and/or on the trailer 120 of a vehicle combination, as shown in the example in Figure 1. The ESS often comprises a battery system, although other options also exist.

The heavy-duty vehicle 100 normally comprises a fuel-cell system 111 arranged to preemptively charge S0 the battery system 112, 121 prior to an uphill portion of a trip to be traversed by the heavy-duty vehicle 100. The computer system 130, 140 then monitors the topology of the road ahead along a planned trip, using, e.g., a map with topography information, and preemptively identifies need for extra power, such as extra power beyond a continuous power level possible to generate by the fuel cell system needed to traverse an upcoming uphill section of road. The preemptively provided charge provided by the fuel cell system often comprises an extra amount of margin energy to ensure that the vehicle reaches the top of the hill before energy in the battery system is depleted. Thus, the SoE at the top of the hill is normally not close to depletion due to the energy margin.

Topography is, generally, a field of geoscience and is concerned with local detail in general, including elevation contours or roads, populated places, structures, land boundaries, and so on. Topography in a narrow sense involves the recording of relief or terrain, the three-dimensional quality of the surface, and the identification of specific landforms; this is also known as geomorphometry. In modern usage, this involves generation of elevation data in digital form. It is often considered to include the graphic representation of the landform on a map by a variety of cartographic relief depiction techniques, including contour lines, hypsometric tints, and relief shading.

The computer system comprises processing circuitry configured to identify S1 a downhill portion C of a trip to be undertaken by the heavy-duty vehicle 100. Identifying downhill portions along a trip can be done by using, e.g., a repository of digital maps comprising topographical information, i.e., height profile data indicating changes in height of the roads in an area. The digital maps can be stored on-board the vehicle 100 or accessed as needed from a remote server. A vehicle traveling from one point to another can use known path planners to determine candidate routes, and the topography along those routes can then be analyzed in order to determine downhill portions. A downhill portion can be identified using various criteria, such as total descent (in meters), total descent rate (in degrees), or average descent per unit distance (unitless). A requirement of a certain minimum length can also be imposed, such that only downhill portion of at least a given length are considered by the computer system. What constitutes a downhill portion can vary from one vehicle to another vehicle, as will be discussed in more detail below. A given downhill section of road may be considered problematic for one vehicle having a comparably small capacity battery system, and not an issue by another vehicle having a larger capacity battery system. Vehicle weight, service brake system capability and ambient temperature are other factors that may be considered in identifying downhill portion of road along a given route.

The processing circuitry is configured to determine S2 at least two candidate routes R1, R2 leading from a starting location A along the trip to an onset B of the downhill portion C of the trip, as discussed above in relation to the examples in Figures 2-4. The candidate routes can be determined using a known path finding algorithm, such as the Dijkstra algorithm implemented on a road grid. Most automotive navigation systems today are capable of generating alternative routes from a start location to a destination. Route planning methods will therefore not be discussed in more detail herein.

The processing circuitry then predicts S3 an SoE of the battery system at the onset B of the downhill portion C for each candidate route R1, R2, and selects S4 a proposed route out of the candidate routes R1, R2 at least in part based on the predicted SoE for each candidate route and on an estimated amount of energy regenerated by traversing the downhill portion C of the trip.

Sometimes none of the candidate routes will result in an SoE at the onset of the downhill portion that allows the vehicle to safely traverse the downhill portion. The processing circuitry can therefore be configured to propose S5 a battery system discharge stop along the route prior to the downhill portion C in case none of the candidate routes satisfies an SoE acceptance criteria at the onset B of the downhill portion C.

Sometimes the candidate routes that result in an allowable SoE at the onset of the downhill portion are too costly in terms of, e.g., added fuel consumption or added time. In this case the processing circuitry can also propose S5 a battery system discharge stop along the route prior to the downhill portion C.

The prediction of SoE made by the computer system can be done at least in part by accounting S31 for a predicted fuel cell charging operation along each candidate route R1, R2. The computer system may, for instance, determine that preemptive battery system charging will ensue at some given point along the trip, due to an upcoming hill passage.

The estimated amount of energy regenerated by traversing the downhill portion C of the trip can be determined using, e.g., a model of vehicle energy generating capability, having regard to the height of the downhill portion C, the approximate weight of the vehicle, and the efficiency of the electrical machines used for regenerative braking. The model of vehicle energy generating capability can be determined by practical experimentation and/or by computer simulation using known methods.

The processing circuitry can also be configured to predict S32 the SoE of the battery system 112, 121 at the onset B of the downhill portion C for each candidate route R1, R2 simply by identifying uphill portions along the candidate routes R1, R2. In other words, the techniques disclosed herein can be implemented in a rather rudimentary manner, by identifying one or more downhill portions deemed potentially problematic, and then suggestion a candidate route leading up to the downhill portion or portions which comprises a minimum of uphill portions of road among the candidate routes.

The computer system may also be configured to account for other parameters which has an impact on energy consumption along a candidate route, such as road surface conditions, i.e., rolling resistance, air drag, whether the road surface is wet or not, and so on. This data can be obtained from an on-board data source or from a remote server 170 via wireless link 150.

According to a more advanced implementation example, the processing circuitry implements a digital twin of the energy system of the heavy-duty vehicle and predicts S33 the SoE of the battery system at the onset B of the downhill portion C for each candidate route R1, R2 at least in part based on the digital twin. A digital twin is a model of the vehicle which models energy consumption and generation as function of, e.g., road topology along a route to be traversed by the vehicle. The digital twin may comprise a full-scale model of the control systems on the vehicle, or a simplified model of the control systems on the vehicle. The SoE evolution along various candidate routes can be evaluated using the digital twin by inputting a candidate route, and other vehicle parameters, corresponding to the physical vehicle. The digital twin may also be set up to account for road conditions such as rolling resistance and weather such as wind, rain, snow, and so on.

According to yet another implementation example, the processing circuitry is configured to receive S34 prerecorded SoE profile data from on-board data storage and/or from a remote server 170 for at least a part of the trip. The prerecorded SoE profile data may for instance be recorded previously by the same vehicle or by some other equivalent vehicle undertaking the same trip. The processing circuitry can then be configured to predict S341 the SoE of the battery system at the onset B of the downhill portion C for each candidate route R1, R2 based at least in part on the prerecorded SoE profile data. Related to these features, the processing circuitry can also be configured to record an SoE profile along the trip as function of location of the heavy-duty vehicle 100 and also to transmit 150 the recorded SoE profile along the trip to on-board data storage and/or to a remote server 170.

Automated selection of the proposed route from the different candidate routes can be done in a number of different ways. The processing circuitry can for instance be configured to select S41 the proposed route out of the candidate routes R1, R2 at least in part based on an energy storage capacity of the battery system 112, 121. The larger the energy storage capacity is, the more regenerative braking can be tolerated. Thus, it is understood that two different vehicles may have different capabilities when it comes to downhill braking capability. A given part of a trip considered to be a downhill portion by one vehicle may in fact not even be identified as such by another vehicle having a larger capacity battery system.

The processing circuitry is optionally configured to determine S411 a current energy storage capacity of the battery system 112, 121 based at least in part on ambient temperature. The energy storage capacity of some battery systems may vary significantly with ambient temperature. Hence, the endurance braking capability of some vehicle may vary significantly with ambient temperature.

The heavy-duty vehicle 100 may also, as discussed above, comprise an energy dissipation device 113, such as a brake resistor. The processing circuitry can then be configured to select S42 the proposed route out of the candidate routes R1, R2 at least in part based on an energy dissipating capacity of the energy dissipation device 113. Thus, a vehicle equipped with a large high capacity energy dissipator device may be able to traverse a longer downhill portion compared to a vehicle lacking an energy dissipation system. The processing circuitry is optionally also configured to determine S421 a current energy dissipating capacity of the energy dissipation device 113 based at least in part on a current temperature of the energy dissipation device 113, which is an advantage since the energy dissipating capability of such devices are normally a function of their temperatures. A hot brake resistor is for instance closer to its energy dissipating limit compared to a cold brake resistor.

The processing circuitry can also be configured to select S43 the proposed route out of the candidate routes R1, R2 at least in part based on an endurance braking capacity and/or a cooling capacity of a service brake system of the heavy-duty vehicle 100. Different service brake systems have different capabilities when it comes to endurance braking. Some service brake systems comprise advanced water-based cooling systems that allow for substantial amounts of endurance braking, while other service brake systems can only handle a limited amount of continuous braking. Fuel cell vehicles generate significant amounts of water during energy production, which water can be stored in tanks and used to cool brakes during endurance braking operations. Such capabilities are preferably accounted for by the computer system in the selection of the proposed route to be followed to the onset of the downhill portion.
Figure 5 is a flow chart of a method to according to an example, which illustrates the various operations that can be performed by the computer system 130, 140. There is illustrated a computer-implemented method performed by a computer system 130, 140 in a heavy-duty vehicle 100 comprising a fuel-cell system 111, a battery system 112, 121. The method comprises identifying S1, by processing circuitry of the computer system, a downhill portion C of a trip to be undertaken by the heavy-duty vehicle 100, determining S2, by the processing circuitry, at least two candidate routes R1, R2 leading from a starting location A along the trip to an onset B of the downhill portion C of the trip, predicting S3, by the processing circuitry, an SoE of the battery system at the onset B of the downhill portion C for each candidate route R1, R2, and selecting S4, by the processing circuitry, a proposed route out of the candidate routes R1, R2 at least in part based on the predicted SoE for each candidate route and on an estimated amount of energy regenerated by traversing the downhill portion C of the trip.

Figure 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures, and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, voice command, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (130, 140) for a heavy-duty vehicle (100) comprising a fuel-cell system (111) and an electrical energy storage system, ESS, (112, 121), wherein the computer system (130, 140) comprises processing circuitry configured to:
identify (S1) a downhill portion (C) of a trip to be undertaken by the heavy-duty vehicle (100),
determine (S2) at least two candidate routes (R1, R2) leading from a starting location (A) along the trip to an onset (B) of the downhill portion (C) of the trip,
predict (S3) a state of energy, SoE, of the ESS at the onset (B) of the downhill portion (C) for each candidate route (R1, R2),
wherein the processing circuitry is further configured to implement a digital twin of the EES of the heavy-duty vehicle, and to predict (S33) the SoE of the ESS at the onset (B) of the downhill portion (C) for each candidate route (R1, R2) at least in part based on the digital twin, and
select (S4) a proposed route out of the candidate routes (R1, R2) at least in part based on the predicted SoE for each candidate route and on an estimated amount of energy regenerated by traversing the downhill portion (C) of the trip.

2. The computer system (130, 140) according to claim 1, where the heavy-duty vehicle (100) comprises a fuel-cell system (111) arranged to preemptively charge (S0) the ESS (112, 121) prior to an uphill portion of a trip to be traversed by the heavy-duty vehicle (100).

3. The computer system (130, 140) according to claim 1 or 2, where the processing circuitry is configured to predict the SoE of the ESS (112, 121) at least in part by accounting (S31) for a predicted fuel cell charging operation along each candidate route (R1, R2).

4. The computer system (130, 140) according to any previous claim, where the processing circuitry is configured to predict (S32) the SoE of the ESS (112, 121) at the onset (B) of the downhill portion (C) for each candidate route (R1, R2) at least in part by identifying uphill portions along the candidate routes (R1, R2).

5. The computer system (130, 140) according to any previous claim, where the processing circuitry is configured to receive (S34) prerecorded SoE profile data from on-board data storage and/or from a remote server (170) for at least a part of the trip.

6. The computer system (130, 140) according to claim 5, where the processing circuitry is configured to predict (S341) the SoE of the ESS at the onset (B) of the downhill portion (C) for each candidate route (R1, R2) based at least in part on the prerecorded SoE profile data.

7. The computer system (130, 140) according to any previous claim, where the processing circuitry is configured to select (S41) the proposed route out of the candidate routes (R1, R2) at least in part based on an energy storage capacity of the ESS (112, 121).

8. The computer system (130, 140) according to claim 7, where the processing circuitry is configured to determine (S411) a current energy storage capacity of the ESS (112, 121) based at least in part on ambient temperature.

9. The computer system (130, 140) according to any previous claim, where the heavy-duty vehicle (100) comprises an energy dissipation device (113), where the processing circuitry is configured to select (S42) the proposed route out of the candidate routes (R1, R2) at least in part based on an energy dissipating capacity of the energy dissipation device (113).

10. The computer system (130, 140) according to claim 9, where the processing circuitry is configured to determine (S421) a current energy dissipating capacity of the energy dissipation device (113) based at least in part on a current temperature of the energy dissipation device (113).

11. The computer system (130, 140) according to any previous claim, where the processing circuitry is configured to select (S43) the proposed route out of the candidate routes (R1, R2) at least in part based on endurance braking capacity and/or a cooling capacity of a service brake system of the heavy-duty vehicle (100).

12. The computer system (130, 140) according to any previous claim, where the processing circuitry is configured to propose (S5) an ESS discharge stop along the route prior to the downhill portion (C) in case none of the candidate routes satisfies an SoE acceptance criteria at the onset (B) of the downhill portion (C).

13. The computer system (130, 140) according to any previous claim, where the starting location is a current location of the heavy-duty vehicle (100).

14. The computer system (130, 140) according to any previous claim, where the processing circuitry is configured to record an SoE profile along the trip as function of location of the heavy-duty vehicle (100).

15. The computer system (130, 140) according to claim 14, where the processing circuitry is configured to transmit (150) the recorded SoE profile along the trip to on-board data storage and/or to a remote server (170).

16. A heavy-duty vehicle (100) comprising a computer system (130, 140) according to any previous claim.

17. A computer-implemented method performed by a computer system (130, 140) in a heavy-duty vehicle (100) comprising a fuel-cell system (111) and an electrical energy storage system, ESS, (112, 121), the method comprising:
identifying (S1), by processing circuitry of the computer system, a downhill portion (C) of a trip to be undertaken by the heavy-duty vehicle (100),
determining (S2), by the processing circuitry, at least two candidate routes (R1, R2) leading from a starting location (A) along the trip to an onset (B) of the downhill portion (C) of the trip,
predicting (S3), by the processing circuitry, a state of energy, SoE, of the ESS at the onset (B) of the downhill portion (C) for each candidate route (R1, R2),
implementing, by the processing circuitry, a digital twin of the EES of the heavy-duty vehicle, and predicting (S33) the SoE of the ESS at the onset (B) of the downhill portion (C) for each candidate route (R1, R2) at least in part based on the digital twin, and
selecting (S4), by the processing circuitry, a proposed route out of the candidate routes (R1, R2) at least in part based on the predicted SoE for each candidate route and on an estimated amount of energy regenerated by traversing the downhill portion (C) of the trip.

18. A computer program product comprising program code for performing, when executed by the processing circuitry, the method of claim 17.

19. A non-transitory computer-readable storage medium comprising instructions, which when executed by the processing circuitry, cause the processing circuitry to perform the method of claim 17.

## Patentansprüche

1. Computersystem (130, 140) für ein Schwerlastfahrzeug (100), umfassend ein Brennstoffzellensystem (111) und ein elektrisches Energiespeichersystem, ESS, (112, 121), wobei das Computersystem (130, 140) eine Verarbeitungsschaltung umfasst, die zu Folgendem konfiguriert ist:
Identifizieren (S1) eines hangabwärtigen Abschnitts (C) einer durch das Schwerlastfahrzeug (100) zu fahrenden Strecke,
Bestimmen (S2) mindestens zweier Kandidatenrouten (R1, R2), die von einem Ausgangsstandort (A) entlang der Strecke zu einem Beginn (B) des hangabwärtigen Abschnitts (C) der Strecke führen, Vorhersagen (S3) eines Energiezustands, SoE, des ESS am Beginn (B) des hangabwärtigen Abschnitts (C) für jede Kandidatenroute (R1, R2),
wobei die Verarbeitungsschaltung ferner dazu konfiguriert ist, einen digitalen Zwilling des EES des Schwerlastfahrzeugs zu implementieren und den SoE des ESS am Beginn (B) des hangabwärtigen Abschnitts (C) für jede Kandidatenroute (R1, R2) mindestens teilweise basierend auf dem digitalen Zwilling vorherzusagen (S33), und
Auswählen (S4) einer vorgeschlagenen Route aus den Kandidatenrouten (R1, R2) mindestens teilweise basierend auf dem vorhergesagten SoE für jede Kandidatenroute und auf einer geschätzten Energiemenge, die durch Durchfahren des hangabwärtigen Abschnitts (C) der Strecke regeneriert wird.

2. Computersystem (130, 140) nach Anspruch 1, wobei das Schwerlastfahrzeug (100) ein Brennstoffzellensystem (111) umfasst, das dazu angeordnet ist, das ESS (112, 121) präventiv vor einem hangaufwärtigen Abschnitt einer durch das Schwerlastfahrzeug (100) zu fahrenden Strecke zu laden (SO).

3. Computersystem (130, 140) nach Anspruch 1 oder 2, wobei die Verarbeitungsschaltung dazu konfiguriert ist, den SoE des ESS (112, 121) mindestens teilweise durch Berücksichtigen (S31) eines vorhergesagten Brennstoffzellenladevorgangs entlang jeder Kandidatenroute (R1, R2) vorherzusagen.

4. Computersystem (130, 140) nach einem der vorhergehenden Ansprüche, wobei die Verarbeitungsschaltung dazu konfiguriert ist, den SoE des ESS (112, 121) am Beginn (B) des hangabwärtigen Abschnitts (C) für jede Kandidatenroute (R1, R2) mindestens teilweise durch Identifizieren hangaufwärtiger Abschnitte entlang der Kandidatenrouten (R1, R2) vorherzusagen (S32).

5. Computersystem (130, 140) nach einem der vorhergehenden Ansprüche, wobei die Verarbeitungsschaltung dazu konfiguriert ist, zuvor aufgezeichnete SoE-Profildaten von einem fahrzeuginternen Datenspeicher und/oder von einem entfernten Server (170) für mindestens einen Teil der Strecke zu empfangen (S34) .

6. Computersystem (130, 140) nach Anspruch 5, wobei die Verarbeitungsschaltung dazu konfiguriert ist, den SoE des ESS am Beginn (B) des hangabwärtigen Abschnitts (C) für jede Kandidatenroute (R1, R2) mindestens teilweise basierend auf den zuvor aufgezeichneten SoE-Profildaten vorherzusagen (S341).

7. Computersystem (130, 140) nach einem der vorhergehenden Ansprüche, wobei die Verarbeitungsschaltung dazu konfiguriert ist, die vorgeschlagene Route aus den Kandidatenrouten (R1, R2) mindestens teilweise basierend auf einer Energiespeicherkapazität des ESS (112, 121) auszuwählen (S41).

8. Computersystem (130, 140) nach Anspruch 7, wobei die Verarbeitungsschaltung dazu konfiguriert ist, eine aktuelle Energiespeicherkapazität des ESS (112, 121) mindestens teilweise basierend auf einer Umgebungstemperatur zu bestimmen (S411).

9. Computersystem (130, 140) nach einem der vorhergehenden Ansprüche, wobei das Schwerlastfahrzeug (100) eine Energiedissipationsvorrichtung (113) umfasst, wobei die Verarbeitungsschaltung dazu konfiguriert ist, die vorgeschlagene Route aus den Kandidatenrouten (R1, R2) mindestens teilweise basierend auf einer Energiedissipationskapazität der Energiedissipationsvorrichtung (113) auszuwählen (S42).

10. Computersystem (130, 140) nach Anspruch 9, wobei die Verarbeitungsschaltung dazu konfiguriert ist, eine aktuelle Energiedissipationskapazität der Energiedissipationsvorrichtung (113) mindestens teilweise basierend auf einer aktuellen Temperatur der Energiedissipationsvorrichtung (113) zu bestimmen (S421).

11. Computersystem (130, 140) nach einem der vorhergehenden Ansprüche, wobei die Verarbeitungsschaltung dazu konfiguriert ist, die vorgeschlagene Route aus den Kandidatenrouten (R1, R2) mindestens teilweise basierend auf einer Dauerbremskapazität und/oder einer Kühlkapazität eines Betriebsbremssystems des Schwerlastfahrzeugs (100) auszuwählen (S43).

12. Computersystem (130, 140) nach einem der vorhergehenden Ansprüche, wobei die Verarbeitungsschaltung dazu konfiguriert ist, einen ESS-Entladungsstopp entlang der Route vor dem hangabwärtigen Abschnitt (C) vorzuschlagen (S5), falls keine der Kandidatenrouten ein SoE-Akzeptanzkriterium am Beginn (B) des hangabwärtigen Abschnitts (C) erfüllt.

13. Computersystem (130, 140) nach einem der vorhergehenden Ansprüche, wobei der Ausgangsstandort ein aktueller Standort des Schwerlastfahrzeugs (100) ist.

14. Computersystem (130, 140) nach einem der vorhergehenden Ansprüche, wobei die Verarbeitungsschaltung dazu konfiguriert ist, ein SoE-Profil entlang der Strecke in Abhängigkeit des Standorts des Schwerlastfahrzeugs (100) aufzuzeichnen.

15. Computersystem (130, 140) nach Anspruch 14, wobei die Verarbeitungsschaltung dazu konfiguriert ist, das aufgezeichnete SoE-Profil entlang der Strecke an einen fahrzeuginternen Datenspeicher und/oder einen entfernten Server (170) zu übertragen (150).

16. Schwerlastfahrzeug (100), umfassend ein Computersystem (130, 140) nach einem der vorhergehenden Ansprüche.

17. Computerimplementiertes Verfahren, das durch ein Computersystem (130, 140) in einem Schwerlastfahrzeug (100), umfassend ein Brennstoffzellensystem (111) und ein elektrisches Energiespeichersystem, ESS, (112, 121), durchgeführt wird, wobei das Verfahren Folgendes umfasst:
Identifizieren (S1), durch eine Verarbeitungsschaltung des Computersystems, eines hangabwärtigen Abschnitts (C) einer durch das Schwerlastfahrzeug (100) zu fahrenden Strecke,
Bestimmen (S2), durch die Verarbeitungsschaltung, mindestens zweier Kandidatenrouten (R1, R2), die von einem Ausgangsstandort (A) entlang der Strecke zu einem Beginn (B) des hangabwärtigen Abschnitts (C) der Strecke führen,
Vorhersagen (S3), durch die Verarbeitungsschaltung, eines Energiezustands, SoE, des ESS am Beginn (B) des hangabwärtigen Abschnitts (C) für jede Kandidatenroute (R1, R2), Implementieren, durch die Verarbeitungsschaltung, eines digitalen Zwillings des EES des Schwerlastfahrzeugs und Vorhersagen (S33) des SoE des ESS am Beginn (B) des hangabwärtigen Abschnitts (C) für jede Kandidatenroute (R1, R2) mindestens teilweise basierend auf dem digitalen Zwilling und
Auswählen (S4), durch die Verarbeitungsschaltung, einer vorgeschlagenen Route aus den Kandidatenrouten (R1, R2) mindestens teilweise basierend auf dem vorhergesagten SoE für jede Kandidatenroute und auf einer geschätzten Energiemenge, die durch Durchfahren des hangabwärtigen Abschnitts (C) der Strecke regeneriert wird.

18. Computerprogrammprodukt, umfassend Programmcode zum Durchführen des Verfahrens nach Anspruch 17, wenn er durch die Verarbeitungsschaltung ausgeführt wird.

19. Nichttransitorisches computerlesbares Speichermedium, umfassend Anweisungen, die, wenn sie durch die Verarbeitungsschaltung ausgeführt werden, die Verarbeitungsschaltung dazu veranlassen, das Verfahren nach Anspruch 17 durchzuführen.

## Revendications

1. Système informatique (130, 140) pour un véhicule lourd (100) comprenant un système de pile à combustible (111) et un système de stockage d'énergie électrique, ESS, (112, 121), dans lequel le système informatique (130, 140) comprend une circuiterie de traitement configurée pour :
identifier (S1) une partie en descente (C) d'un trajet à entreprendre par le véhicule lourd (100),
déterminer (S2) au moins deux itinéraires candidats (R1, R2) menant d'un emplacement de départ (A) le long du trajet à un début (B) de la partie en descente (C) du trajet,
prédire (S3) un état d'énergie, SoE, de l'ESS au début (B) de la partie en descente (C) pour chaque itinéraire candidat (R1, R2),
dans lequel la circuiterie de traitement est en outre configurée pour mettre en œuvre un jumeau numérique de l'EES du véhicule lourd, et pour prédire (S33) le SoE de l'ESS au début (B) de la partie en descente (C) pour chaque itinéraire candidat (R1, R2) au moins en partie sur la base du jumeau numérique, et
sélectionner (S4) un itinéraire proposé parmi les itinéraires candidats (R1, R2) au moins en partie sur la base du SoE prédit pour chaque itinéraire candidat et d'une quantité estimée d'énergie régénérée en traversant la partie en descente (C) du trajet.

2. Système informatique (130, 140) selon la revendication 1, dans lequel le véhicule lourd (100) comprend un système de pile à combustible (111) agencé pour charger de manière préemptive (SO) l'ESS (112, 121) avant une partie en montée d'un trajet à traverser par le véhicule lourd (100).

3. Système informatique (130, 140) selon la revendication 1 ou 2, dans lequel la circuiterie de traitement est configurée pour prédire le SoE de l'ESS (112, 121) au moins en partie en prenant en compte (S31) une opération de charge de pile à combustible prédite le long de chaque itinéraire candidat (R1, R2).

4. Système informatique (130, 140) selon l'une quelconque des revendications précédentes, dans lequel la circuiterie de traitement est configurée pour prédire (S32) le SoE de l'ESS (112, 121) au début (B) de la partie en descente (C) pour chaque itinéraire candidat (R1, R2) au moins en partie en identifiant des parties en montée le long des itinéraires candidats (R1, R2).

5. Système informatique (130, 140) selon l'une quelconque des revendications précédentes, dans lequel la circuiterie de traitement est configurée pour recevoir (S34) des données de profil de SoE préenregistrées à partir d'un stockage de données embarqué et/ou à partir d'un serveur distant (170) pour au moins une partie du trajet.

6. Système informatique (130, 140) selon la revendication 5, dans lequel la circuiterie de traitement est configurée pour prédire (S341) le SoE de l'ESS au début (B) de la partie en descente (C) pour chaque itinéraire candidat (R1, R2) sur la base au moins en partie des données de profil de SoE préenregistrées.

7. Système informatique (130, 140) selon l'une quelconque des revendications précédentes, dans lequel la circuiterie de traitement est configurée pour sélectionner (S41) l'itinéraire proposé parmi les itinéraires candidats (R1, R2) au moins en partie sur la base d'une capacité de stockage d'énergie de l'ESS (112, 121).

8. Système informatique (130, 140) selon la revendication 7, dans lequel la circuiterie de traitement est configurée pour déterminer (S411) une capacité de stockage d'énergie actuelle de l'ESS (112,121) sur la base au moins en partie d'une température ambiante.

9. Système informatique (130, 140) selon l'une quelconque des revendications précédentes, dans lequel le véhicule lourd (100) comprend un dispositif de dissipation d'énergie (113), dans lequel la circuiterie de traitement est configurée pour sélectionner (S42) l'itinéraire proposé parmi les itinéraires candidats (R1, R2) au moins en partie sur la base d'une capacité de dissipation d'énergie du dispositif de dissipation d'énergie (113).

10. Système informatique (130, 140) selon la revendication 9, dans lequel la circuiterie de traitement est configurée pour déterminer (S421) une capacité de dissipation d'énergie actuelle du dispositif de dissipation d'énergie (113) sur la base au moins en partie d'une température actuelle du dispositif de dissipation d'énergie (113).

11. Système informatique (130, 140) selon l'une quelconque des revendications précédentes, dans lequel la circuiterie de traitement est configurée pour sélectionner (S43) l'itinéraire proposé parmi les itinéraires candidats (R1, R2) au moins en partie sur la base d'une capacité de freinage d'endurance et/ou d'une capacité de refroidissement d'un système de frein de service du véhicule lourd (100).

12. Système informatique (130, 140) selon l'une quelconque des revendications précédentes, dans lequel la circuiterie de traitement est configurée pour proposer (S5) un arrêt de décharge de l'ESS le long de l'itinéraire avant la partie en descente (C) dans le cas où aucun des itinéraires candidats ne satisfait à un critère d'acceptation de SoE au début (B) de la partie en descente (C).

13. Système informatique (130, 140) selon l'une quelconque des revendications précédentes, dans lequel l'emplacement de départ est un emplacement actuel du véhicule lourd (100).

14. Système informatique (130, 140) selon l'une quelconque des revendications précédentes, dans lequel la circuiterie de traitement est configurée pour enregistrer un profil de SoE le long du trajet en fonction de l'emplacement du véhicule lourd (100).

15. Système informatique (130, 140) selon la revendication 14, dans lequel la circuiterie de traitement est configurée pour transmettre (150) le profil de SoE enregistré le long du trajet à un stockage de données embarqué et/ou à un serveur distant (170).

16. Véhicule lourd (100) comprenant un système informatique (130, 140) selon l'une quelconque des revendications précédentes.

17. Procédé mis en œuvre par ordinateur réalisé au moyen d'un système informatique (130, 140) dans un véhicule lourd (100) comprenant un système de pile à combustible (111) et un système de stockage d'énergie électrique, ESS, (112, 121), le procédé comprenant:
l'identification (S1), au moyen d'une circuiterie de traitement du système informatique, d'une partie en descente (C) d'un trajet à entreprendre par le véhicule lourd (100),
la détermination (S2), au moyen de la circuiterie de traitement, d'au moins deux itinéraires candidats (R1, R2) menant d'un emplacement de départ (A) le long du trajet à un début (B) de la partie en descente (C) du trajet,
la prédiction (S3), au moyen de la circuiterie de traitement, d'un état d'énergie, SoE, de l'ESS au début (B) de la partie en descente (C) pour chaque itinéraire candidat (R1, R2),
la mise en œuvre, au moyen de la circuiterie de traitement, d'un jumeau numérique de l'EES du véhicule lourd, et la prédiction (S33) du SoE de l'ESS au début (B) de la partie en descente (C) pour chaque itinéraire candidat (R1, R2) au moins en partie sur la base du jumeau numérique, et
la sélection (S4), au moyen de la circuiterie de traitement, d'un itinéraire proposé parmi les itinéraires candidats (R1, R2) au moins en partie sur la base du SoE prédit pour chaque itinéraire candidat et d'une quantité estimée d'énergie régénérée en traversant la partie en descente (C) du trajet.

18. Produit-programme informatique comprenant un code de programme pour réaliser, lorsqu'il est exécuté au moyen de la circuiterie de traitement, le procédé selon la revendication 17.

19. Support de stockage lisible par ordinateur non transitoire comprenant des instructions, qui, lorsqu'elles sont exécutées au moyen de la circuiterie de traitement, amènent la circuiterie de traitement à réaliser le procédé selon la revendication 17.
